(19) Europäisches Patentamt
European Patent Office
Office européen des brevets

(11) **EP 3 234 629 B1**

(12) **FASCICULE DE BREVET EUROPEEN**

(45) Date de publication et mention
de la délivrance du brevet:
**26.12.2018 Bulletin 2018/52**

(51) Int Cl.:
***G01S 5/02*** *(2010.01)*     ***G01S 5/06*** *(2006.01)*

(21) Numéro de dépôt: **15801131.2**

(22) Date de dépôt: **10.11.2015**

(86) Numéro de dépôt international:
**PCT/EP2015/076227**

(87) Numéro de publication internationale:
**WO 2016/083124 (02.06.2016 Gazette 2016/22)**

(54) **PROCÉDÉ DE LOCALISATION PASSIVE D'UN ÉMETTEUR NON MOBILE**

VERFAHREN ZUR PASSIVEN ORTUNG EINES UNBEWEGLICHEN SENDERS

METHOD FOR PASSIVELY LOCATING A NON-MOVABLE TRANSMITTER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **28.11.2014 FR 1402710**

(43) Date de publication de la demande:
**25.10.2017 Bulletin 2017/43**

(73) Titulaire: **THALES**
**92400 Courbevoie (FR)**

(72) Inventeurs:
• **ENDERLI, Cyrille**
**78990 Elancourt (FR)**
• **GRANDIN, Jean-François**
**78990 Elancourt (FR)**
• **SEUTE, Hugo**
**78990 Elancourt (FR)**

(74) Mandataire: **Lucas, Laurent Jacques et al
Marks & Clerk France
Conseils en Propriété Industrielle
Immeuble Visium
22, Avenue Aristide Briand
94117 Arcueil Cedex (FR)**

(56) Documents cités:
**CH-A1- 699 326**     **FR-A1- 3 000 223**
**US-A1- 2004 189 521**     **US-A1- 2008 186 235**
**US-B1- 6 408 246**

**Description**

La présente invention concerne le domaine de l'écoute électromagnétique. La présente invention concerne plus particulièrement un procédé de localisation passive d'un émetteur non mobile.

Dans un contexte aéroporté ou spatial, la localisation passive d'émetteur peut être effectuée par différentes méthodes comme par exemple, par des mesures d'angle d'arrivée (ou AOA pour « *Angle Of Arrival*»), d'évolution de phase sur une grande base (ou LBI pour « *Long Base Interferometer*» ou LBPDE pour *«Long Base Phase Difference Evolution*»), de différences de temps d'arrivée (ou TDOA pour «*Time Difference Of Arrival*») entre au moins deux porteurs, ou encore par Différence de Temps de Passage de Lobe (ou DTPL).

Les mesures d'angle d'arrivée sont couramment utilisées pour la localisation passive d'émetteurs. Elles nécessitent que les récepteurs soient équipés soit d'un goniomètre d'amplitude, soit d'un interféromètre. Le défaut principal de la localisation par mesure d'angle d'arrivée est son manque de précision quand le temps alloué à la localisation est court.

Si l'on dispose d'un interféromètre sur grande base, on peut utiliser des mesures de LBPDE cependant, ces mesures sont sujettes à des ambigüités. De plus, les techniques actuelles de localisation par évolution de phase sur une grande base ou par différence de temps d'arrivée, ne prennent pas en compte le caractère périodique des formes d'onde radar les plus fréquemment rencontrées. Il en résulte, pour ces formes d'ondes, des performances sous-optimales aussi bien en termes de précision de localisation qu'en termes de charge de calcul et d'utilisation de la bande passante entre les porteurs.

Il est connu de l'art antérieur, notamment par "An Algebraic Solution of the GPS Equations" de Stephen Bancroft (IEEE Transactions AES VOL. AES-21, NO. 7 JANUARY 1985), une méthode de localisation dite de Bancroft. Dans cette publication, une estimation explicite (non itérative) en moindres carrés de la position est exposée dans un contexte similaire du GPS. La méthode ne fait pas d'hypothèse particulière sur la nature du signal. Cependant, si on tente d'étendre directement la méthode présentée au cas d'un train d'impulsion périodique, on trouve un système de trois équations du second degré qui n'est pas résoluble explicitement en général. De plus, de nombreuses solutions non valables doivent être éliminées si le système est résolu numériquement.

Un problème avec la localisation passive d'émetteurs à l'aide des temps d'arrivée des impulsions (ou TOA pour « *Time Of Arrival*») vient du nombre de mesures à traiter. Lors de l'interception d'un signal, une mesure de TOA est associée à chaque impulsion reçue. Le nombre d'impulsions interceptées, donc de mesures de temps d'arrivée d'impulsions, devient rapidement très grand car ces impulsions sont émises à une cadence très élevée. De plus, avec les solutions existantes, calculer une localisation à partir des TOA implique d'estimer le temps d'arrivée de chaque impulsion.

La complexité du problème d'estimation va donc croitre rapidement avec le nombre d'impulsions. Par exemple, pour un algorithme explicite basé sur la méthode des moindres carrés linéaires, la complexité asymptotique est donnée par $0(I^2M)$ avec I le nombre de paramètres inconnus à estimer et M le nombre de mesures. Dans le cas d'estimation avec les temps d'arrivée on a M=P (nombre de récepteurs) x N (nombre d'impulsions) et I=3 (dimensions spatiales) +N (nombre de dates d'émission inconnues, soit nombre d'impulsions) soit une complexité asymptotique en $0(N^3P)$ qui est prohibitive au vu du nombre d'impulsions susceptibles d'être reçues.

Concernant la localisation basée sur les différences de temps d'arrivée des impulsions, comme on calcule une différence entre les mesures, on n'a plus à estimer les dates d'émission de chaque impulsion. Cependant, le calcul de cette différence augmente la variance des mesures de TDOA par rapport à celles de TOA et fait apparaitre des corrélations entre les mesures. La matrice de covariance des mesures de différences de temps d'arrivée des impulsions est :

$$\Sigma_{TDOA} = \sigma_{TOA}^2 \cdot \begin{bmatrix} 2 & 1 & ... & 1 \\ 1 & 2 & ... & 1 \\ 1 & 1 & \ddots & \vdots \\ 1 & 1 & ... & 2 \end{bmatrix}$$

Au lieu de :

$$\Sigma_{TOA} = \sigma_{TOA}^2 \cdot \begin{bmatrix} 1 & 0 & ... & 0 \\ 0 & 1 & ... & 0 \\ 0 & 0 & \ddots & \vdots \\ 0 & 0 & ... & 1 \end{bmatrix}$$

L'augmentation des termes diagonaux et l'introduction de termes hors-diagonale dans la matrice de covariance des mesures conduit à une légère dégradation des performances de localisation.

De plus, l'élimination du paramètre "date d'émission " correspondant à la date de début d'émission des impulsions, enlève la possibilité d'introduire une connaissance a priori sur ce paramètre. Or un a priori permet d'introduire de l'information supplémentaire dans l'estimateur ce qui permet d'améliorer les performances de la localisation finale.

Un autre problème de la localisation passive par TOA ou TDOA est lié aux communications entre les plateformes. L'une ou l'autre des deux méthodes précédentes implique une communication entre les plateformes pour calculer les résultats de la localisation. Les informations transmises d'une plateforme vers l'autre sont les temps d'arrivée des impulsions reçues. Comme le nombre d'impulsions reçues est important et que les temps d'arrivée doivent être transmis précisément (codés sur un nombre de bits importants), on a donc une forte contrainte sur le débit de la liaison de données. De plus ces transmissions pénalisent la discrétion des plateformes.

Un document FR 3 000 223 A1 divulgue un procédé de dénombrement ou de localisation passif d'émetteurs radar.

Un but de l'invention est notamment de corriger tout ou partie des inconvénients de l'art antérieur en proposant une solution permettant d'améliorer la précision de localisation d'un émetteur non mobile sans pénaliser la discrétion des détecteurs.

A cet effet, l'invention a pour objet un procédé de localisation passive d'un émetteur non mobile au sol mis en oeuvre par un groupe d'au moins deux stations réceptrices, chacune des stations réceptrices comprenant un détecteur de radars et une référence de temps, l'ensemble des références de temps étant synchronisées entre elles et ledit émetteur émettant un ensemble d'impulsions périodiques, la durée d'un train d'impulsions étant suffisamment courte pour que chacune des stations réceptrices ait toujours une trajectoire assimilable à un mouvement rectiligne uniforme, chaque station réceptrice étant configurée pour mesurer des temps d'arrivés des impulsions de l'émetteur et calculer un temps moyen d'arrivée desdites impulsions, ledit procédé étant caractérisé en ce qu'une première estimation de la position dudit émetteur est réalisée par la méthode de Bancroft à partir des temps moyens d'arrivée des impulsions émise par l'émetteur au niveau de chaque station du groupe d'au moins deux stations réceptrices, le résultat obtenu étant ensuite utilisé comme point d'initialisation d'une méthode de maximum de vraisemblance afin de converger vers la position dudit émetteur.

Selon une variante de mise en oeuvre, le procédé est mis en oeuvre par au moins deux stations réceptrices et ledit procédé comprend :

- Une étape Etp1 de mesure des temps d'arrivés des impulsions de l'émetteur par chaque station réceptrice,
- Une étape Etp2 de calcul du temps moyen d'arrivée des impulsions par chaque station réceptrice,
- Une étape Etp3 de transmission des temps moyens d'arrivée des impulsions calculés à une station réceptrice prédéterminée,
- Une étape Etp4 de calcul, par ladite station réceptrice prédéterminée, de la localisation de l'émetteur à partir de tous les temps moyens d'arrivée des impulsions à l'aide de la méthode de Bancroft puis de la méthode du maximum de vraisemblance.

Selon une variante de mise en oeuvre, la ou les stations réceptrices sont sont des stations réceptrices aéroportées.

Selon une variante de mise en oeuvre, la ou les stations réceptrices sont des stations réceptrices spatiales.

Les avantages fournis, outre l'optimalité de l'estimation dans les cas des émetteurs périodiques, sont relatifs à la quantité restreinte de données échangées entre les stations réceptrices ainsi qu'à la précision de localisation atteignable en un temps aussi court qu'un train d'impulsions radar. Par ailleurs un avantage important apporté par l'invention est une initialisation pertinente des algorithmes itératifs d'estimation de la position à partir des mesures de temps d'arrivée.

D'autres particularités et avantages de la présente invention apparaîtront plus clairement à la lecture de la description ci-après, donnée à titre illustratif et non limitatif, et faite en référence aux dessins annexés, dans lesquels :

- La figure 1 illustre un exemple de mise en oeuvre du procédé de localisation selon l'invention ;

- La figure 2 représente les temps d'arrivées d'impulsions au niveau d'une station réceptrice à différents instants ;

- La figure 3 illustre des étapes possibles du procédé de localisation selon l'invention ;

- La figure 4 représente la configuration utilisée pour les résultats présentés ;

- La figure 5 représente des exemples d'ellipses à 90% de confiance obtenues à l'aide du procédé selon l'invention.

Le principe de la localisation passive selon l'invention repose sur une estimation de la position d'un émetteur non mobile au sol en deux temps à l'aide de deux méthodes de calcul différentes.

Classiquement, le calcul de la position d'un émetteur est effectué à l'aide d'une estimation du maximum de vraisemblance. Le problème est que cette méthode est difficile à appliquer directement car elle implique des équations non linéaires compliquées à résoudre. L'estimateur maximise une fonction qui comporte plusieurs maxima locaux. De plus, cet algorithme est très sensible aux conditions initiales et a besoin d'avoir une bonne initialisationpour converger vers le maximum global de vraisemblance.

L'invention propose d'effectuer en deux temps l'optimisation du critère de maximum de vraisemblance. Une première estimation sommaire est faite avec la méthode de Bancroft connue de l'homme du métier notamment par "An Algebraic Solution of the GPS Equations" de Stephen Bancroft (IEEE Transactions AES VOL. AES-21, NO. 7 JANUARY 1985). Cette première estimation est effectuée en supposant que les mesures ne sont pas bruitées. La méthode de Bancroft a pour avantage d'être explicite et donc non itérative. Elle permet de réduire les équations à un problème des moindres carrés. L'estimation obtenue est ensuite utilisée comme point d'initialisation pour l'algorithme de maximum de vraisemblance qui lui est itératif.

L'utilisation d'une première estimation sommaire a pour avantage de fournir un point d'initialisation, pour l'algorithme de maximum de vraisemblance, qui est suffisamment proche de la solution pour converger vers le maximum global et non vers un maximum local. De plus, cela permet de réduire le nombre d'itérations de l'algorithme de maximum de vraisemblance.

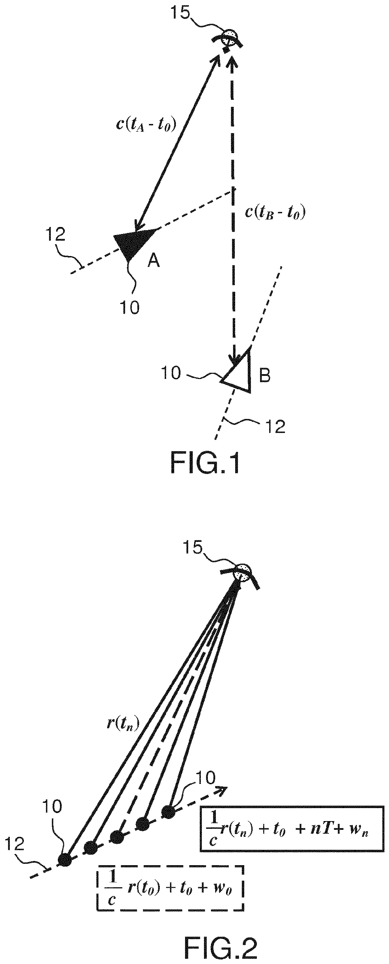

En référence aux figures 1 et 2, on considère P stations réceptrices 10 mobile, comme par exemple des stations réceptrices aéroportées ou spatiales, avec P un entier strictement positif quelconque. Chaque station réceptrice 10 comprend un détecteur de radars et une référence de temps configurée de sorte que l'ensemble des références de temps sont synchronisées entre elles.

On suppose que l'émetteur 15 émet un train de N impulsions périodiques (N représentant un entier strictement positif) avec une période de récurrence notée T. Dans ces conditions, le temps d'émission de la $n^{\text{ième}}$ impulsion peut s'écrire :

$$t_0 + nT$$

où $t_0$ représente le temps du milieu de la rafale d'impulsions et où $n = \frac{1-N}{2}, \ldots, 0, \ldots, \frac{N-1}{2}$. Afin de simplifier les expressions, on considèrera le nombre d'impulsions N impair. Bien entendu, le raisonnement peut être généralisé à un nombre entier quelconque N strictement positif.

Le temps d'arrivée $t_{n,p}$ de l'impulsion d'indice n sur la $p^{\text{ième}}$ station réceptrice (avec p=1,...,P) est le temps d'émission de l'impulsion ajouté au temps de propagation vers la station, avec un bruit de mesure. Ce temps d'arrivée peut s'écrire :

$$t_{n,p} = \frac{1}{c} r_p\big(t_{n,p}\big) + t_0 + nT + w_{n,p} \qquad (1)$$

Où : c représente la vitesse de propagation,
$r_p(t_{n,p})$ représente la distance entre l'émetteur et la $p^{\text{ième}}$ station réceptrice au temps d'arrivée $t_{n,p}$
$t_0$ représente le temps d'émission de l'impulsion,
T représente la période de répétition des impulsions
$w_{n,p}$ représente le bruit de mesure supposé gaussien, centré et indépendant en n (d'une mesure à l'autre) et en p (d'un récepteur à l'autre) de variance notée $\sigma_{TOA}^2$.

On suppose que la durée d'un train d'impulsions est suffisamment courte pour que chacune des P stations réceptrices ait toujours une trajectoire 12 assimilable à un mouvement rectiligne uniforme. Sous ces hypothèses on peut vérifier que :

$$t_{n,p} \approx a_p + nT + w_{n,p} \ , \qquad (2)$$

Où : $a_p = \frac{r_{0,p}}{c} + t_0 \ ,$

$r_{0,p}$ représente la distance entre l'émetteur et la $p^{\text{ième}}$ station réceptrice au milieu de sa trajectoire,

T représente la période de récurrence ou période de répétition des impulsions ;

$w_{n,p}$ représente le bruit lié à la $n^{\text{ième}}$ impulsion sur la $p^{\text{ième}}$ station réceptrice.

Le modèle (2) va permettre d'estimer la période de récurrence des impulsions T et le temps moyen d'arrivée des impulsions sur la station réceptrice d'indice p, p variant de 1 à P.

La relation non linéaire entre $(a_p)_{p=1...P}$ et les coordonnées de l'émetteur, implicites dans $r_{0,p}$, pourra ensuite être inversée par un algorithme explicite ce qui fournira une initialisation pertinente des algorithmes itératifs d'estimation fine de la position de la cible.

On considère le cas particulier de la localisation passive d'un émetteur 15 par une seule station réceptrice 10. Si P=1 on peut mettre les équations (2) sous la forme vectorielle suivante :

$$\tau_1 = H_1\theta_1 + w_1, \qquad\qquad (3)$$

Avec :

$$\tau_1 = \begin{bmatrix} t_{-\frac{N-1}{2},1} \\ \vdots \\ t_{\frac{N-1}{2},1} \end{bmatrix}, \quad H_1 = \begin{bmatrix} 1 & -\frac{N-1}{2} \\ \vdots & \vdots \\ 1 & \frac{N-1}{2} \end{bmatrix}, \quad \theta_1 = \begin{bmatrix} a_1 \\ T \end{bmatrix} \text{ et } w_1 = \begin{bmatrix} w_{-\frac{N-1}{2},1} \\ \vdots \\ w_{\frac{N-1}{2},1} \end{bmatrix}$$

Les vecteurs $\tau_1$, $\theta_1$ et $w_1$, sont de taille N et la matrice $H_1$ est de taille Nx2. Les composantes du bruit $w_1$ étant Gaussiennes, centrées et indépendantes, l'estimation du maximum de vraisemblance pour les paramètres $\theta_1$ est donnée par la résolution du problème des moindres carrés dont la solution est classiquement donnée par :

$$\hat{\theta}_1 = (H_1^*H_1)^{-1}H_1^*\tau_1.$$

La matrice $H_1{}^*H_1$ est diagonale :

$$H_1^*H_1 = \begin{bmatrix} N & 0 \\ 0 & \frac{(N-1)N(N+1)}{12} \end{bmatrix},$$

D'où les estimations :

$$\boxed{\hat{a}_1 = \frac{1}{N}\sum_{n=-\frac{N-1}{2}}^{\frac{N-1}{2}} t_{n,1}}$$

et

$$\boxed{\hat{T} = \frac{12}{(N-1)N(N+1)}\sum_{n=-\frac{N-1}{2}}^{\frac{N-1}{2}} n\, t_{n,1}}$$

Où $\hat{a}_1$ représente l'estimation du temps moyen d'arrivée des impulsions sur la station réceptrice et l'émetteur et $\hat{T}$ représente l'estimation de la période de récurence.

On considère maintenant le cas d'un nombre de stations réceptrices 10 au moins égal à 2.

Si P>1, on peut mettre les équations (2) sous une forme vectorielle similaire à l'équation (3) précédente de la

manière suivante :

$$\tau_P = H_P \theta_P + w_P .$$

Où, par blocs de taille N associés à chacune des P stations réceptrices, on a :

$$\tau_P = \begin{bmatrix} \begin{bmatrix} t_{-\frac{N-1}{2},1} \\ \vdots \\ t_{\frac{N-1}{2},1} \end{bmatrix} \\ \vdots \\ \begin{bmatrix} t_{-\frac{N-1}{2},P} \\ \vdots \\ t_{\frac{N-1}{2},P} \end{bmatrix} \end{bmatrix}, \quad H_P = \begin{bmatrix} \begin{bmatrix} 1 \\ \vdots \\ 1 \end{bmatrix} & \begin{bmatrix} 0 \\ \vdots \\ 0 \end{bmatrix} & \cdots & \begin{bmatrix} 0 \\ \vdots \\ 0 \end{bmatrix} & \begin{bmatrix} -\frac{N-1}{2} \\ \vdots \\ \frac{N-1}{2} \end{bmatrix} \\ \begin{bmatrix} 0 \\ \vdots \\ 0 \end{bmatrix} & \begin{bmatrix} 1 \\ \vdots \\ 1 \end{bmatrix} & \cdots & \begin{bmatrix} 0 \\ \vdots \\ 0 \end{bmatrix} & \begin{bmatrix} -\frac{N-1}{2} \\ \vdots \\ \frac{N-1}{2} \end{bmatrix} \\ \vdots & & \ddots & & \vdots \\ \begin{bmatrix} 0 \\ \vdots \\ 0 \end{bmatrix} & \begin{bmatrix} 0 \\ \vdots \\ 0 \end{bmatrix} & \cdots & \begin{bmatrix} 1 \\ \vdots \\ 1 \end{bmatrix} & \begin{bmatrix} -\frac{N-1}{2} \\ \vdots \\ \frac{N-1}{2} \end{bmatrix} \end{bmatrix},$$

$$\theta_P = \begin{bmatrix} a_1 \\ \vdots \\ a_P \\ T \end{bmatrix} \quad \text{et} \quad w_P = \begin{bmatrix} \begin{bmatrix} w_{-\frac{N-1}{2},1} \\ \vdots \\ w_{\frac{N-1}{2},1} \end{bmatrix} \\ \vdots \\ \begin{bmatrix} w_{-\frac{N-1}{2},P} \\ \vdots \\ w_{\frac{N-1}{2},P} \end{bmatrix} \end{bmatrix}.$$

Les vecteurs $\tau_P$, $\theta_P$ et $w_P$ sont de taille NP et la matrice $H_P$ est de taille NPx(P+1). De même que dans le cas précédent où P=1, les composantes du bruit $w_P$ sont Gaussiennes, centrées et indépendantes. Si leur variance est la même pour toutes les stations, l'estimation du maximum de vraisemblance pour les paramètres $\theta_p$ est encore donnée par la résolution du problème des moindres carrés dont la solution est :

$$\hat{\theta}_P = (H_P^* H_P)^{-1} H_P^* \tau_P .$$

La matrice $H_P^* H_P$ est diagonale :

$$H_P^* H_P = \begin{bmatrix} N & 0 & \cdots & 0 \\ 0 & N & \cdots & 0 \\ \vdots & \vdots & \ddots & \vdots \\ 0 & 0 & \cdots & \frac{P(N-1)N(N+1)}{12} \end{bmatrix},$$

D'où les estimations :

$$\hat{a}_p = \frac{1}{N} \sum_{n=-\frac{N-1}{2}}^{\frac{N-1}{2}} t_{n,p} \quad , \quad p = 1 \dots P.$$

$$\hat{T} = \frac{12}{P(N-1)N(N+1)} \sum_{p=1}^{P} \left( \sum_{n=-\frac{N-1}{2}}^{\frac{N-1}{2}} n\, t_{n,p} \right).$$

Où $\hat{a}_p$ représente l'estimation du temps moyen d'arrivée des impulsions sur la station réceptrice d'indice p et l'émetteur et $\hat{T}$ représente l'estimation de la période de récurrence des impulsions.

Les expressions obtenues montrent que le procédé d'estimation peut être mis en oeuvre en calculant le temps moyen d'arrivée sur chacune des stations puis en mettant en commun les résultats obtenus pour en déduire une estimation de la position de la cible.

L'estimation de la période de récurrence est donnée quant à elle par la moyenne des P estimations faites individuellement par chaque station.

Si la variance du bruit n'est pas la même d'une station à l'autre, l'estimation de $\theta_p$ est modifiée en la résolution du problème des moindres carrés pondérés, ce qui ne change que l'expression finale de $\hat{T}$ où la moyenne devient une moyenne pondérée, mais pas celles de $\hat{a}_p$, p =1...P.

Comme vu précédemment, l'estimation de la position de l'émetteur est réalisée en deux temps. Une première estimation grossière est calculée par la méthode de Bancroft. Le résultat obtenu est ensuite utilisée comme point d'initialisation pour une méthode du maximum de vraisemblance (également connue sous le sigle anglo saxon MLE pour " Maximum Likelihood Estimator ").

Les expressions de $\hat{a}_p$ obtenues précédemment correspondent à des réalisations de variables aléatoires de moyenne $\frac{r_{0p}}{c} + t_0$ et de variance $\frac{\sigma_{TOA}^2}{N}$. La méthode de Bancroft consiste à ajuster les paramètres inconnus, à savoir la position (x,y,z) de l'émetteur et le temps d'émission $t_0$, aux valeurs de $\hat{a}_p$ en négligeant le bruit, par l'intermédiaire de la relation liant les distances $r_{0p}$ aux positions de l'émetteur et des P stations réceptrices.

La relation entre $r_{0p}$, la position (x,y,z) de l'émetteur, et la position $(x_p, y_p, z_p)$ de la $p^{\text{ième}}$ station est :

$$r_{0p} = \sqrt{\left(x - x_p\right)^2 + \left(y - y_p\right)^2 + \left(z - z_p\right)^2}.$$

D'autre part, en absence de bruit, on a

$$r_{0p} = c\left(\hat{a}_p - t_0\right).$$

En élevant les deux expressions de $r_{0p}$ au carré, on obtient pour tout p=1...P :

$$x_p^2 + y_p^2 + z_p^2 - \left(c\hat{a}_p\right)^2 + x^2 + y^2 + z^2 - (ct_0)^2$$
$$= 2\left(xx_p + yy_p + zz_p - \left(c\hat{a}_p\right)(ct_0)\right).$$

Cette dernière expression fait apparaître la fonctionnelle de Minkowski notée <.|.> telle que pour tous vecteurs de dimension quatre v=(v₁,v₂,v₃,v₄) et w=(w₁,w₂,w₃,w₄) on ait :

$$\langle v|w \rangle = v_1 w_1 + v_2 w_2 + v_3 w_3 - v_4 w_4 .$$

Si on place les informations liées à une station réceptrice p dans un vecteur $s_p$ et les inconnues dans un vecteur u :

$$s_p = \begin{bmatrix} x_p \\ y_p \\ z_p \\ c \cdot \widehat{a_p} \end{bmatrix} \; ; \; u = \begin{bmatrix} x \\ y \\ z \\ c \cdot t_0 \end{bmatrix}.$$

En introduisant la matrice B suivante :

$$B = \begin{bmatrix} x_1 & y_1 & z_1 & -c \cdot \widehat{a_1} \\ x_2 & y_2 & z_2 & -c \cdot \widehat{a_2} \\ \vdots & \vdots & \vdots & \vdots \\ x_P & y_P & z_P & -c \cdot \widehat{a_P} \end{bmatrix},$$

et en posant :

$$k = \frac{1}{2}\begin{bmatrix} \langle s_1|s_1 \rangle \\ \langle s_2|s_2 \rangle \\ \vdots \\ \langle s_P|s_P \rangle \end{bmatrix}, \qquad \Lambda = \frac{1}{2}\langle u|u \rangle, \qquad e = \begin{bmatrix} 1 \\ 1 \\ \vdots \\ 1 \end{bmatrix},$$

les P équations sur les inconnues s'écrivent de manière compacte :

$$Bu = \Lambda e + k.$$

Le système ci-dessus est sur-dimensionné pour un nombre de stations réceptrices supérieur à 4 (P équations pour 4 inconnues). Ce système peut être résolu avec la pseudo-inverse $B^+$ de la matrice B en supposant $\Lambda$ connu dans un premier temps :

$$B^+ = (B^*B)^{-1}B^*.$$

$$u = B^+(k + \Lambda e).$$

En utilisant cette dernière expression de u pour développer l'expression de $\Lambda = \langle u|u \rangle$, on obtient un trinôme du second degré en $\Lambda$ :

$$\Lambda^2 \langle B^+e, B^+e \rangle + \Lambda(2\langle B^+k, B^+e \rangle - 1) + \langle B^+k, B^+k \rangle = 0.$$

Ce dernier fournit deux solutions candidates pour $\Lambda$, notées $\Lambda_1$ et $\Lambda_2$, conduisant à deux solutions possibles $u_1$ et $u_2$ au problème :

$$u_1 = B^+(k + \Lambda_1 e) \quad ; \quad u_2 = B^+(k + \Lambda_2 e).$$

Une de ces deux solutions sera cohérente par rapport à la situation. Par exemple, l'altitude estimée sera proche de la surface de la terre.

Comme vu précédemment, la position trouvée par la méthode de Bancroft est ensuite utilisée comme point d'initialisation pour une estimation du maximum de vraisemblance.

Dans cette deuxième estimation, On prend maintenant en compte le bruit $w_n$ dans les mesures de temps d'arrivée des impulsions. L'expression des $\widehat{a_p}$ devient :

$$\widehat{a_p} = \frac{1}{c}\sqrt{\left(x_p - x\right)^2 + \left(y_p - y\right)^2 + \left(z_p - z\right)^2} + t_0 + w_n = f_p(x, y, z, t_0) + w_n$$

Où : c représente la vitesse de propagation des impulsions,

(x, y, z) représente les coordonnées de la position de l'émetteur,

$(x_p, y_p, z_p)$ représente les coordonnées de la position de la $p^{ième}$ station réceptrice,

$t_0$ représente la date de début d'émission des impulsions,

$f_p$ représente une fonction non linéaire qui relie la position de l'émetteur et la date de début d'émission. Cette fonction $f_p$ représente le temps d'arrivée de l'impulsion sans bruit au niveau de la $p^{ieme}$ station,

$w_n$ représente le bruit de mesure considéré comme un bruit gaussien de variance $\sigma_a^2 = \frac{\sigma_{TOA}^2}{N}$ avec $\sigma_{TOA}^2$ la variance instrumentale de la mesure des TOA et N le nombre d'impulsions périodiques considérés.

Suivant un mode de mise en oeuvre de l'invention la méthode du maximum de vraisemblance peut contenir un a priori sur le paramètre $t_0$ correspondant à la date d'émission de l'impulsion au centre du train d'impulsions émis par l'émetteur. On peut considérer, sans perte de généralité, que les impulsions sont datées en prenant comme origine la date de réception de l'impulsion centrale par la première station réceptrice (10) : $\widehat{a_1} = 0$.

Ainsi si l'on considère que les distances émetteur-stations réceptrices sont très supérieures aux distances entre les stations réceptrices (cas des bases courtes : par exemple la distance entre l'émetteur et la stations peut être de l'ordre de 200 km alors que la distance entre les stations peut être de l'ordre du km), on peut considérer que la distance $d_0 = c(\widehat{a_1} - t_0) = -c \cdot t_0$ correspondant à une distance grossière entre les stations réceptrices et l'émetteur peut être modélisée par une variable aléatoire d'espérance notée $\widehat{d_0}$ et de variance notée $\sigma_{d_0}^2$ relativement élevée.

On choisit $\widehat{d_0}$ proche de la limite de portée des récepteurs. Cela revient à éliminer des positions trop éloignées, qui seraient incohérentes car dans ce cas le signal n'aurait pas été capté, et trop proches car on suppose que le signal aurait été capté auparavant.

En pratique, même si l'émetteur est très proche des stations réceptrices, cet *a priori* n'introduit quasiment pas de biais car l'information qu'il apporte devient de plus en plus négligeable comparée à l'information apportée par les mesures réelles au fur et à mesure que l'émetteur se rapproche.

Pour les P stations réceptrices on a le vecteur de mesures suivant :

$$\begin{bmatrix} \widehat{a_1} \\ \vdots \\ \widehat{a_P} \\ -\widehat{d_0}/c \end{bmatrix} = \begin{bmatrix} \frac{1}{c}\sqrt{(x_1 - x)^2 + (y_1 - y)^2 + (z_1 - z)^2} + t_0 \\ \vdots \\ \frac{1}{c}\sqrt{(x_P - x)^2 + (y_P - y)^2 + (z_P - z)^2} + t_0 \\ t_0 \end{bmatrix} + w = \begin{bmatrix} f_1(x, y, z, t_0) \\ \vdots \\ f_P(x, y, z, t_0) \\ t_0 \end{bmatrix} + w$$

La matrice de covariance liée à ces mesures (supposées indépendantes) est:

$$\Sigma = \begin{bmatrix} \sigma_a^2 & \dots & 0 & 0 \\ \vdots & \ddots & \vdots & \vdots \\ 0 & \dots & \sigma_a^2 & 0 \\ 0 & \dots & 0 & \sigma_{d_0}^2/c^2 \end{bmatrix}$$

Si on fait une approximation linéaire au point $(x_i, y_i, z_i, t_{0_i})$ pour les fonctions $f_p$ on obtient :

$$\widehat{a_p} = f_p(x_i, y_i, z_i, t_{0_i}) + \left(\frac{\partial f_p}{\partial x} \quad \frac{\partial f_p}{\partial y} \quad \frac{\partial f_p}{\partial z} \quad \frac{1}{c}\frac{\partial f_p}{\partial t_0}\right)_{x_i, y_i, z_i, t_{0_i}} \times \begin{bmatrix} x - x_i \\ y - y_i \\ z - z_i \\ c(t_0 - t_{0_i}) \end{bmatrix}$$

avec

$$\left(\frac{\partial f_p}{\partial x}\right)_{x_i, y_i, z_i, t_{0_i}} = \frac{x_i - x_p}{c\sqrt{(x_p - x_i)^2 + (y_p - y_i)^2 + (z_p - z_i)^2}}$$

$$\left(\frac{\partial f_p}{\partial y}\right)_{x_i, y_i, z_i, t_{0_i}} = \frac{y_i - y_p}{c\sqrt{(x_p - x_i)^2 + (y_p - y_i)^2 + (z_p - z_i)^2}}$$

$$\left(\frac{\partial f_p}{\partial z}\right)_{x_i, y_i, z_i, t_{0_i}} = \frac{z_i - z_p}{c\sqrt{(x_p - x_i)^2 + (y_p - y_i)^2 + (z_p - z_i)^2}}$$

$$\left(\frac{1}{c}\frac{\partial f_p}{\partial t_0}\right)_{x_i, y_i, z_i, t_{0_i}} = \frac{1}{c}$$

On considère une variable intermédiaire ε définie par :

$$\epsilon = \begin{bmatrix} \frac{\partial f_1}{\partial x} & \frac{\partial f_1}{\partial y} & \frac{\partial f_1}{\partial z} & \frac{1}{c} \\ \vdots & \vdots & \vdots & \vdots \\ \frac{\partial f_P}{\partial x} & \frac{\partial f_P}{\partial y} & \frac{\partial f_P}{\partial z} & \frac{1}{c} \\ 0 & 0 & 0 & \frac{1}{c} \end{bmatrix}_{x_i, y_i, z_i, t_{0_i}} \times \begin{bmatrix} x - x_i \\ y - y_i \\ z - z_i \\ c(t_0 - t_{0_i}) \end{bmatrix} - \left(\begin{bmatrix} \widehat{a_1} \\ \vdots \\ \widehat{a_P} \\ \widehat{-d_0}/c \end{bmatrix} - \begin{bmatrix} f_1(x_i, y_i, z_i, t_{0_i}) \\ \vdots \\ f_P(x_i, y_i, z_i, t_{0_i}) \\ t_{0_i} \end{bmatrix}\right)$$

$$= M\Delta\text{-R}$$

Avec :

$$M = \begin{bmatrix} \frac{\partial f_1}{\partial x} & \frac{\partial f_1}{\partial y} & \frac{\partial f_1}{\partial z} & \frac{1}{c} \\ \vdots & \vdots & \vdots & \vdots \\ \frac{\partial f_P}{\partial x} & \frac{\partial f_P}{\partial y} & \frac{\partial f_P}{\partial z} & \frac{1}{c} \\ 0 & 0 & 0 & \frac{1}{c} \end{bmatrix}_{x_i, y_i, z_i, t_{0_i}}, \quad \Delta = \begin{bmatrix} x - x_i \\ y - y_i \\ z - z_i \\ c(t_0 - t_{0_i}) \end{bmatrix} \text{ et } R = \left(\begin{bmatrix} \widehat{a_1} \\ \vdots \\ \widehat{a_P} \\ \widehat{-d_0}/c \end{bmatrix} - \begin{bmatrix} f_1(x_i, y_i, z_i, t_{0_i}) \\ \vdots \\ f_P(x_i, y_i, z_i, t_{0_i}) \\ t_{0_i} \end{bmatrix}\right)$$

Cette variable matricielle ε représente l'erreur d'approximation à l'itération courante. La première colonne représente l'erreur d'approximation en x, la deuxième en y, la troisième en z et la dernière en $t_0$.

On minimise le critère c défini par :

$$C = \epsilon^T \Sigma^{-1} \epsilon = (M\Delta - R)^T \Sigma^{-1}(M\Delta - R)$$

Cela revient à minimiser la norme du vecteur d'erreur pondéré par la matrice $\Sigma$ qui contient les variances des estimateurs $\widehat{a_p}$.

On obtient donc une nouvelle estimation de la position avec :

$$\Delta = (M^T \Sigma^{-1} M)^{-1} M^T \Sigma^{-1} R$$

On réitère la procédure jusqu'à ce que $\Delta$, le vecteur de déplacement vers la nouvelle position, soit inférieur à un seuil prédéterminé. Suivant un mode de mis en oeuvre, on peut choisir comme contrainte, par exemple, $\|\Delta\| < 1$ *m*.

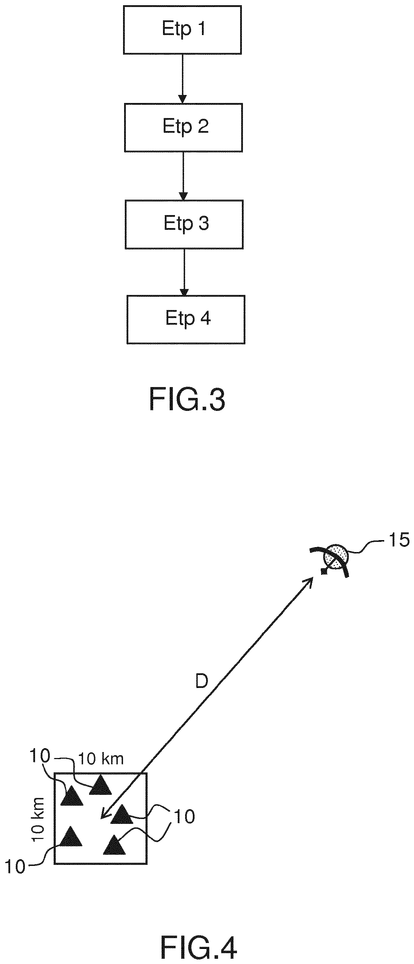

La figure 3 représente des étapes possibles du procédé de localisation passive selon l'invention dans le cas où il est mis en oeuvre par au moins deux stations réceptrice 10. Comme vu précédemment, on suppose que chaque station réceptrice 10 comprend une référence de temps et que toutes les références de temps sont synchronisées entre elles.

Le procédé comprend une première étape Etp1 de réception des impulsions et de mesure des temps d'arrivés de chaque impulsion de l'émetteur 15 par chacune des stations réceptrices 10.

Le temps moyen d'arrivée des impulsions au niveau des stations réceptrices 10 est ensuite calculé par chaque station réceptrice au cours d'une étape Etp2. Lors de cette étape, chaque station réceptrice effectue une compression des impulsions reçues en calculant la moyenne des temps d'arrivée.

Au cours d'une étape Etp3 de transmission, chaque temps moyen calculé par chaque station réceptrice 10 est transmis à une station réceptrice prédéterminée. Cette station prédéterminée sera chargée d'estimer la position de l'émetteur à partir des temps moyens transmis au cours d'une étape de calcul Etp4 à l'aide de la méthode de Bancroft puis de la méthode du maximum de vraisemblance.

De façon avantageuse, chaque station réceptrice 10, autre que ladite station réceptrice 10 prédéterminée, transmet non pas chacun des temps d'arrivée des impulsions reçues ($t_{np}$) mais les temps moyens d'arrivée ($\hat{a}_p$). Ceci permet de réduire le débit de données entre station réceptrice et donc permet une plus grande discrétion.

Les tableaux 1 et 2 ci-dessous, illustrent des exemples de résultats obtenus en appliquant le procédé selon l'invention.

La figure 4 illustre la configuration géométrique associée aux résultats présentés. On considère un émetteur 15 non mobile et un groupe de P stations réceptrices 10. On suppose que les stations réceptrices 10 sont uniformément distribuées sur une base de 10 km x 10 km. Bien entendu cet exemple n'est nullement limitatif et les différentes stations 10 peuvent être réparties de façon non uniforme. On note D la distance entre le centre de cette base et l'émetteur 15.

Dans ces mesures, les paramètres fixés sont :

- $\sigma_{TOA}$ = 30 ns : bruit de mesure du TOA sur chaque récepteur,

- $\widehat{d_0} = 200$ km : a priori sur la distance émetteur-base,

- $\sigma_{d_0}$ = 50 km : écart-type de l'a priori,

- Problème ramené à deux dimensions.

Les tableaux 1 et 2 présentent les écarts types d'erreur sur les coordonnées *[x y]* de la position de l'émetteur pour un nombre d'impulsions N respectivement égal à 30 et 3.

Les performances du procédé selon l'invention (notées E-TOA) sont comparées avec celles (notées E-TDOA) d'un estimateur du type TDOA par maximum de vraisemblance classique pour différents nombres de stations réceptrices P et différentes distances base-émetteur D.

Tableau 1

| N = 30 | | |
|---|---|---|
| Paramètres | D = 200 km | D = 60 km |
| P = 4 | E-TOA : 4,86 km<br>E-TDOA : 5,26 km | E-TOA : 404 m<br>E-TDOA : 412 m |
| P = 8 | E-TOA : 3,04 km<br>E-TDOA : 3,35 km | E-TOA : 236 m<br>E-TDOA : 261 m |

Tableau 2

| N = 3 | | |
|---|---|---|
| Paramètres | D = 200 km | D = 60 km |
| P = 4 | E-TOA : 12,3 km<br>E-TDOA : 16,7 km | E-TOA : 1,28 km<br>E-TDOA : 1,33 km |
| P = 8 | E-TOA : 9,21 km<br>E-TDOA : 11,6 km | E-TOA : 799 m<br>E-TDOA : 873 km |

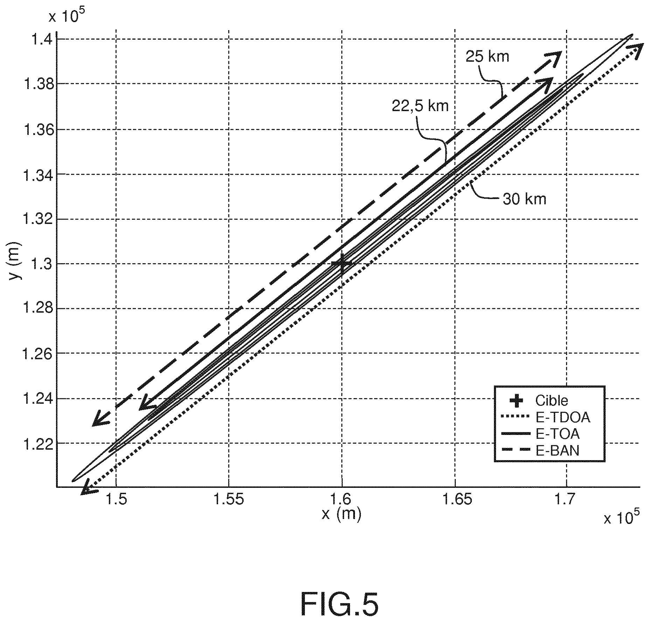

La figure 5 illustre des exemples d'ellipses à 90% de confiance obtenues à l'aide du procédé selon l'invention notée E-TOA, à l'aide d'un estimateur utilisant la méthode du maximum de vraisemblance classique notée E-TDOA et avec la méthode de Bancroft notée E-BAN. Dans cet exemple, P=8 stations réceptrices, N=10 impulsions, et D=200 km. Le centre de la base contenant les stations réceptrices est situé en (0, 0).

Les tableaux 1 et 2 ainsi que la figure 5 mettent en évidence la meilleure précision de localisation du procédé selon l'invention par rapport aux méthodes classiques.

Comme vu précédemment, le fait de transmettre les temps moyen d'arrivée des impulsions plutôt que toutes les impulsions reçues permet de réduire la quantité de données échangées entre les stations réceptrices et permet donc une plus grande discrétion des stations.

Le tableau ci-dessous présente le nombre de transfert de données entre deux stations réceptrices pour N=3 et N=100 impulsions dans le cas du procédé selon l'invention (E-TOA) et celui d'un estimateur utilisant la méthode du maximum de vraisemblance classique (E-TDOA).

Tableau 3

| Estimateur | N = 3 | N = 100 |
|---|---|---|
| E-TOA | 1 | 1 |
| E-TDOA | 3 | 99 |

La présente invention a été décrite à travers une application aéroportée, cette description n'est nullement limitative et peut être généralisé à d'autres domaines comme par exemple le domaine spatial.

**Revendications**

1.  Procédé de localisation passive d'un émetteur (15) non mobile au sol mis en oeuvre par un groupe d'au moins deux stations réceptrices (10), chacune des stations réceptrices (10) comprenant un détecteur de radars et une référence de temps, l'ensemble des références de temps étant synchronisées entre elles, ledit émetteur (15) émettant un ensemble d'impulsions périodiques, la durée d'un train d'impulsions étant suffisamment courte pour que chacune des stations réceptrices (10) ait toujours une trajectoire (12) assimilable à un mouvement rectiligne uniforme, chaque station réceptrice (10) étant configurée pour mesurer des temps d'arrivés des impulsions de l'émetteur (15) et calculer un temps moyen d'arrivée desdites impulsions, ledit procédé étant **caractérisé en ce qu'**une première estimation de la position dudit émetteur (15) est réalisée par la méthode de Bancroft à partir des temps moyens d'arrivée des impulsions émise par l'émetteur (15) au niveau de chaque station (10) du groupe d'au moins deux stations réceptrices (10), le résultat obtenu étant ensuite utilisé comme point d'initialisation d'une méthode de maximum de vraisemblance afin de converger vers la position dudit émetteur.

**2.** Procédé selon la revendication précédente mis en oeuvre par au moins deux stations réceptrices (10) dans lequel ledit procédé comprend :

- Une étape Etp1 de mesure des temps d'arrivés des impulsions de l'émetteur (15) par chaque station réceptrice (10),
- Une étape Etp2 de calcul du temps moyen d'arrivée des impulsions par chaque station réceptrice (10),
- Une étape Etp3 de transmission des temps moyens d'arrivée des impulsions calculés à une station réceptrice (10) prédéterminée,
- Une étape Etp4 de calcul, par ladite station réceptrice (10) prédéterminée, de la localisation de l'émetteur (15) à partir de tous les temps moyens d'arrivée des impulsions à l'aide de la méthode de Bancroft puis de la méthode du maximum de vraisemblance.

**3.** Procédé selon une des revendications précédentes dans lequel la ou les stations réceptrices (10) sont des stations réceptrices aéroportées.

**4.** Procédé selon une des revendications 1 ou 2 dans lequel la ou les stations réceptrices (10) sont des stations réceptrice spatiales.

## Patentansprüche

**1.** Verfahren zur passiven Ortung eines unbeweglichen Senders (15) am Boden, welches durch eine Gruppe von mindestens zwei Empfangsstationen (10) umgesetzt wird, wobei jede der Empfangsstationen (10) einen Radardetektor und eine Zeitreferenz besitzt, wobei sämtliche Zeitreferenzen untereinander synchronisiert sind, wobei der Sender (15) eine Gruppe von periodischen Impulsen sendet, wobei die Dauer einer Impulsfolge kurz genug ist, damit jede der Empfangsstationen (10) stets eine Bahn (12) besitzt, die mit einer einheitlichen, geradlinigen Bewegung gleichsetzbar ist, wobei jede Empfangsstation (10) konfiguriert ist, um Ankunftszeiten der Impulse des Senders (15) zu messen und eine mittlere Ankunftszeit der Impulse zu berechnen, wobei das Verfahren **dadurch gekennzeichnet ist, dass** eine erste Schätzung der Position des Senders (15) anhand des Bancroft-Verfahrens anhand der mittleren Ankunftszeiten der vom Sender (15) gesendeten Impulse an jeder Station (10) der Gruppe von mindestens zwei Empfangsstationen (10) vorgenommen wird, wobei das erzielte Resultat anschließend als Initialisierungspunkt eines Verfahrens der maximalen Wahrscheinlichkeit verwendet wird, um auf die Position des Senders zu konvergieren.

**2.** Verfahren nach dem vorhergehenden Anspruch, welches durch mindestens zwei Empfangsstationen (10) umgesetzt wird, wobei das Verfahren Folgendes beinhaltet:

- einen Schritt Etp1 der Messung der Ankunftszeiten der Impulse des Senders (15) durch jede der Empfangsstationen (10),
- einen Schritt Etp2 der Berechnung der mittleren Ankunftszeit der Impulse durch jede der Empfangsstationen (10),
- einen Schritt Etp3 der Übertragung der bei einer vorbestimmten Empfangsstation (10) berechneten mittleren Ankunftszeiten der Impulse,
- einen Schritt Etp4 der Berechnung, durch die vorbestimmte Empfangsstation (10), der Lokalisierung des Senders (15) anhand aller mittlerer Ankunftszeiten der Impulse mit Hilfe des Bancroft-Verfahrens und anschließend mit Hilfe des Verfahrens der maximalen Wahrscheinlichkeit.

**3.** Verfahren nach einem der vorhergehenden Ansprüche, bei welchem die eine oder die mehreren Empfangs station(en) (10) eine oder mehrere luftgestützte Empfangs station(en) ist/sind.

**4.** Verfahren nach einem der Ansprüche 1 oder 2, bei welchem die eine oder die mehreren Empfangsstation(en) (10) eine oder mehrere Raumempfangsstation(en) ist/sind.

**Claims**

1.  A method for passively locating a non-movable transmitter (15) on the ground implemented by a group of at least two receiving stations (10), each of the receiving stations (10) comprising a detector of radars and a time reference, the set of time references being mutually synchronized, said transmitter (15) transmitting a set of periodic pulses, the duration of a pulse train being sufficiently short for each of the receiving stations (10) to always have a trajectory (12) that can be regarded as a uniform rectilinear motion, each receiving station (10) being configured to measure arrival times of the pulses of the transmitter (15) and to compute a mean arrival time of said pulses, said method being **characterized in that** a first estimation of the position of said transmitter (15) is carried out by the Bancroft scheme on the basis of the mean arrival times of the pulses transmitted by the transmitter (15) at the level of each station (10) of the group of at least two receiving stations (10),
    the result obtained being used thereafter as point for initializing a maximum likelihood scheme so as to converge toward the position of said transmitter.

2.  The method as claimed in the preceding claim, implemented by at least two receiving stations (10) in which said method comprises:

    - A step Etp1 of measuring the arrival times of the pulses of the transmitter (15) by each receiving station (10),
    - A step Etp2 of computing the mean arrival time of the pulses by each receiving station (10),
    - A step Etp3 of dispatching the computed mean arrival times of the pulses to a predetermined receiving station (10),
    - A step Etp4 of computing, by said predetermined receiving station (10), the location of the transmitter (15) on the basis of all the mean arrival times of the pulses with the aid of the Bancroft scheme and then of the maximum likelihood scheme.

3.  The method as claimed in one of the preceding claims, in which the receiving station or stations (10) are airborne receiving stations.

4.  The method as claimed in one of claims 1 or 2, in which the receiving station or stations (10) are space receiving stations.

15

$c(t_A - t_0)$

12

A

10

$c(t_B - t_0)$

10

B

12

FIG.1

15

$r(t_n)$

10

10

10

$\dfrac{1}{c} r(t_n) + t_0 + nT + w_n$

12

$\dfrac{1}{c} r(t_0) + t_0 + w_0$

FIG.2

FIG.3

FIG.4

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3000223 A1

**Littérature non-brevet citée dans la description**

- **STEPHEN BANCROFT.** An Algebraic Solution of the GPS Equations. *IEEE Transactions AES,* Janvier 1985, vol. AES-21 (7